# EUROPÄISCHE PATENTSCHRIFT

(11) **EP 2 705 280 B1**
(45) Veröffentlichungstag und Bekanntmachung des Hinweises auf die Patenterteilung: **18.07.2018**
(21) Anmeldenummer: 12719588.1
(22) Anmeldetag: 30.04.2012
(51) Int. Cl.: F16H 61/00, F16H 61/688

(54) **VERFAHREN ZUM BETREIBEN EINES KUPPLUNGSGETRIEBES, KUPPLUNGSGETRIEBE**
METHOD FOR OPERATING A CLUTCH TRANSMISSION, CLUTCH TRANSMISSION
PROCÉDÉ POUR FAIRE FONCTIONNER UNE BOÎTE DE VITESSES À EMBRAYAGE ET BOÎTE DE VITESSES À EMBRAYAGE CORRESPONDANTE

(30) Priorität: 06.05.2011 DE 102011100802
(43) Veröffentlichungstag der Anmeldung: 12.03.2014
(73) Patentinhaber: Audi AG, 85045 Ingolstadt (DE)
(72) Erfinder: SCHULLER, Dietmar, 93336 Altmannstein (DE); AMMLER, Stefan, 86673 Bergheim (DE); FLEISCHMANN, Hans-Peter, 85134 Stammham (DE)
(74) Vertreter: Wohnert, Dietmar
(86) Internationale Anmeldenummer: PCT/EP2012/001847
(87) Internationale Veröffentlichungsnummer: WO 2012/152393

(56) Entgegenhaltungen:
- EP-A2- 1 150 040
- DE-A1-102008 009 653
- DE-A1-102009 041 236
- US-A1- 2002 046 913

## Beschreibung

Die Erfindung betrifft einen Hydraulikkreis zur Steuerung und Kühlung eines Kupplungsgetriebes, insbesondere Doppelkupplungsgetriebes, insbesondere eines Kraftfahrzeuges, mit zwei Kupplungszylindern und einer Mehrzahl vorzugsweise doppelseitig ansteuerbarer Schaltzylinder, und ein Verfahren zum Betreiben eines Kupplungsgetriebes. Doppelkupplungsgetriebe werden bevorzugt in Personenkraftwagen eingesetzt. Ein Doppelkupplungsgetriebe weist im Allgemeinen zwei koaxial zueinander angeordnete Getriebeeingangswellen auf, die jeweils einem Teilgetriebe zugeordnet sind. Jeder der Getriebeeingangswellen ist eine Kupplung zugeordnet, über die die Getriebeeingangswelle des jeweiligen Teilgetriebes kraftschlüssig mit dem Abtrieb eines Motors, vorzugsweise eines Verbrennungsmotors eines Kraftfahrzeugs, gekoppelt werden kann. Ein erstes der beiden Teilgetriebe umfasst typischerweise die ungeraden Gänge, während ein zweites der Teilgetriebe die geraden Gänge sowie den Rückwärtsgang umfasst.

Während der Fahrt ist typischerweise eines der Teilgetriebe aktiv, was bedeutet, dass die diesem Teilgetriebe zugeordnete Getriebeeingangswelle über die ihr zugeordnete Kupplung mit dem Motor gekoppelt ist. In dem aktiven Teilgetriebe ist ein Gang eingelegt, der eine momentane Getriebeübersetzung bereitstellt. Eine Steuerung ermittelt, ob abhängig von der Fahrsituation der nächst höhere oder nächst niedrige Gang eingelegt werden soll. Dieser voraussichtlich als nächstes verwendete Gang wird in dem zweiten, inaktiven Teilgetriebe eingelegt. Für einen Gangwechsel wird dann die Kupplung des inaktiven Teilgetriebes geschlossen, während die Kupplung des aktiven Teilgetriebes geöffnet wird. Bevorzugt wird, wenn sich das Öffnen der Kupplung des aktiven Teilgetriebes und das Schließen der Kupplung des inaktiven Teilgetriebes derart überschneiden, dass keine oder nur eine geringfügige Kraftflussunterbrechung vom Motor auf die Antriebswelle des Kraftfahrzeugs gegeben ist. In Folge des Gangwechsels wird das zuvor aktive Teilgetriebe inaktiv, während das zuvor inaktive Teilgetriebe zum aktiven Teilgetriebe wird. Anschließend kann in dem nun inaktiven Teilgetriebe der voraussichtlich als nächstes benötigte Gang eingelegt werden.

Das Ein- und Auslegen der Gänge erfolgt über Elemente, bevorzugt über Schaltschienen, die von Hydraulikzylindern, den sogenannten, vorstehend bereits genannten Schaltzylindern, betätigt werden. Die Hydraulikzylinder sind bevorzugt als doppeltwirkende Hydraulikzylinder, insbesondere Gleichlaufzylinder oder Differenzialzylinder, ausgebildet, sodass jedem Schaltzylinder vorzugsweise zwei Gänge zugeordnet sein können. Alternativ können auch einfach wirkende Hydraulikzylinder vorgesehen sein. Die Hydraulikzylinder, welche die Elemente, insbesondere Schaltschienen, betätigen, werden auch als Gangstellerzylinder bezeichnet. Ein als Gleichlaufzylinder ausgebildeter Gangstellerzylinder, dem insbesondere zwei Gänge zugeordnet sind, weist bevorzugt drei Schaltpositionen auf, wobei insoweit in einer ersten ein bestimmter Gang, in einer zweiten ein anderer, bestimmter Gang und in einer dritten keiner der beiden genannten Gänge eingelegt ist.

Auch die den beiden Teilgetrieben zugeordneten Kupplungen werden hydraulisch betätigt, also geschlossen beziehungsweise geöffnet. Es wird bevorzugt, dass die Kupplungen jeweils schließen, wenn sie mit Hydraulikdruck beaufschlagt werden, während sie geöffnet sind, wenn kein Hydraulikdruck anliegt, d.h., ein der jeweiligen Kupplung zugeordneter Hydraulikzylinder, der - wie vorstehend erwähnt - auch Kupplungszylinder genannt wird, druckentlastet ist.

Im Übrigen ist die Funktionsweise eines Doppelkupplungsgetriebes an sich bekannt, sodass hier nicht näher darauf eingegangen wird.

Der in den vorstehenden Absätzen beschriebene Aufbau und die dort erläuterte Funktionsweise gilt bevorzugt auch beim oder im Zusammenhang mit dem Gegenstand der Erfindung.

Wie bereits angedeutet, werden Doppelkupplungsgetriebe durch einen Hydraulikkreis sowohl gesteuert beziehungsweise geregelt als auch gekühlt. Dieser Hydraulikkreis, beziehungsweise Baugruppen davon, sowie damit verknüpfte Verfahren sind Gegenstand der Erfindung.

Bekannte Kupplungsgetriebe umfassen wenigstens eine Pumpe zum Fördern von Hydraulikmedium sowie mindestens einen Druckspeicher zum Aufnehmen und Bereitstellen von unter Druck stehendem Hydraulikmedium. Das von der Pumpe geförderte Hydraulikmedium wird in den Druckspeicher geleitet, um dort bei Bedarf, auch wenn die Pumpe nicht angetrieben wird, unter Druck stehendes Hydraulikmedium zur Verfügung zu stellen, beziehungsweise um den Druck im Hydraulikkreis aufrecht zu halten. Zum Antrieb der Pumpe ist dieser ein Elektromotor zugeordnet, der in Abhängigkeit von dem Ladebedarf des Druckspeichers betrieben wird.

Aus dem Stand der Technik, beispielsweise aus der deutschen Offenlegungsschrift 102 43 282 A1, ist ein Kupplungsgetriebe bekannt, bei dem der Druck in dem Hydraulikkreis durch einen Drucksensor erfasst wird. Nimmt der Druck in dem Hydraulikkreis ab, weil beispielsweise nicht mehr ausreichend unter Druck stehendes Hydraulikmedium von dem Druckspeicher zur Verfügung gestellt wird, so wird der Elektromotor angeschaltet, um neues Hydraulikmedium in den Hydraulikkreis zu fördern, um den dort vorherrschenden Druck zu erhöhen. Das Vorsehen des Drucksensors in dem Hydraulikkreis bedarf jedoch eines gewissen Bauraumbedarfs und entsprechenden Herstellungskosten.

US 2002/0046913 A1, welche alle Merkmale des Oberbegriffs nach Anspruch 1 und Anspruch 6 zeigt, ein Kupplungsgetriebe, das einen Hydraulikkreis aufweist, welcher einen Druckspeicher sowie eine elektromotorisch angetriebene Pumpe umfasst, wobei der von der Pumpe erzeugte Hydraulikdruck durch den bereitgestellten Strom zum Antreiben der Pumpe kontrolliert wird. Es handelt sich dabei also um eine Strom-Steuerung der Pumpe, wobei ein Druckentlastungsventil vorgesehen ist, um einen Überdruck zu vermeiden, und wobei optional ein Drucksensor vorgesehen werden kann, um ein Regelsystem zum Einstellen des gewünschten Drucks herzustellen.
DE 10 2009 041 236 A1 offenbart, dass ein aufgenommener elektrischer Strom einer Betriebsmittelpumpe proportional zu dem von der Betriebsmittelpumpe bereitgestellten Betriebsmitteldruck ist, sodass aus dem aufgenommen Strom der Betriebsmitteldruck errechnet werden kann.
Der Erfindung liegt somit die Aufgabe zugrunde, ein Verfahren sowie ein Kupplungsgetriebe zu schaffen, die auf einfache und kostengünstige Art und Weise das sichere Bereitstellen eines ausreichenden Drucks in dem Hydraulikkreis gewährleisten.
Die der Erfindung zugrundeliegende Aufgabe wird durch ein Verfahren gemäß Anspruch 1 sowie durch ein Kupplungsgetriebe gemäß Anspruch 6 gelöst.
Das erfindungsgemäße Verfahren zeichnet sich dadurch aus, dass zum Bestimmen des Ladebedarfs die mindestens eine Pumpe durch den Elektromotor angetrieben und die dabei erfolgte Stromaufnahme des Elektromotors ermittelt wird. Hierbei wird ausgenutzt, dass der Rückstaudruck in dem Hydraulikkreis, der sich auf die Pumpe auswirkt, sich in dem Stromverbrauch des Elektromotors widerspiegelt. Je höher der Druck in dem Hyd raulikkreis ist, desto höher fällt die Stromaufnahme des Elektromotors aus, die zum Betreiben der Pumpe entgegen dem Rückstaudruck notwendig ist. Zum Bestimmen des Ladebedarfs wird somit der Elektromotor zunächst angeschaltet und die Pumpe angetrieben sowie die Stromaufnahme des Elektromotors erfasst, um zu ermitteln, ob ein Ladebedarf des Druckspeichers vorliegt oder nicht. Dadurch entfällt der sonst notwendige Drucksensor, wodurch vorhandener Bauraum besser ausgenutzt und Teilekosten verringert werden können. Die Stromaufnahme des Elektromotors wird dabei besonders bevorzugt durch die dem Elektromotor zugeordnete Ansteuerelektronik ermittelt beziehungsweise erfasst. Vorzugsweise handelt es sich bei dem Elektromotor um einen Drehzahlgeregelten Elektromotor.

Erfindungsgemäß ist vorgesehen, dass der Hydraulikkreis ein den Druckspeicher aufweisenden Betätigungskreis, insbesondere Hochdruckkreis, und einen Kühlkreis, insbesondere Niederdruckkreis, umfasst, wobei in Abhängigkeit des Drucks des Druckspeichers, der zumindest im Wesentlichen dem Druck in dem Hydraulikkreis beziehungsweise in dem Betätigungskreis entspricht, das Hydraulikmedium in den Betätigungskreis oder in den Kühlkreis, insbesondere mittels eines Druckregelventils geleitet beziehungsweise gefördert wird. Der Hydraulikkreis ist somit in zwei Teilkreise aufgeteilt, wobei einer, der Betätigungskreis, zum Betätigen der Kupplung und der Schaltzylinder dient, während der andere Teilkreis, der Kühlkreis, zum Kühlen, insbesondere mindestens einer, vorzugsweise mehrerer Kupplungen des Kupplungsgetriebes dient. Im Betrieb wird das von der Fördereinrichtung, die die wenigstens eine Pumpe und den Elektromotor umfasst, geförderte Hydraulikmedium entweder dem Betätigungskreis oder dem Kühlkreis zugeführt. Entspricht der Druck in dem Betätigungskreis bereits einem Maximaldruck oder Betriebsdruck, so wird das Hydraulikmedium bevorzugt dem Kühlkreis zugeführt. Andernfalls wird das Hydraulikmedium vorzugsweise in den Betätigungskreis geleitet, um dort den ausreichenden Druck zu gewährleisten, beziehungsweise um den Druckspeicher zu laden. Vorzugsweise wird hierzu ein hydraulisch betätigtes Schaltventil vorgesehen.

Erfindungsgemäß wird in Abhängigkeit der Stromaufnahme ermittelt, ob das Hydraulikmedium dem Betätigungskreis oder dem Kühlkreis zugeführt wird. Ist bekannt, dass in Abhängigkeit des vorliegenden Drucks das Hydraulikmedium entweder dem Betätigungskreis oder dem Kühlkreis zugefördert wird, so lässt sich durch die Stromaufnahme ermitteln, welcher Zustand gerade vorliegt. In dem Betätigungskreis liegt in der Regel ein deutlich höherer Druck als in dem Kühlkreis vor, sodass sich die Stromaufnahme deutlich von einem Fördern des Hydraulikmediums in den Betätigungskreis zu dem Fördern des Hydraulikmediums in den Kühlkreis unterscheidet. So ist es auf einfache Art und Weise möglich, durch Erfassen der Stromaufnahme zu ermitteln, in welchen Hydraulikteilkreis das Hydraulikmedium gerade gefördert wird, und ob ein Ladebedarf besteht oder nicht.

Vorzugsweise wird der Elektromotor zu vorgebbaren Zeitpunkten angestellt und auf eine vorgebbare Drehzahl, insbesondere über eine vorgebbare Drehzahlrampe hochgefahren. Bei den vorgebbaren Zeitpunkten kann es sich um vorgebbare Zeitabstände oder auch um absolute Zeitpunkte mit entsprechenden Zeitabständen zueinander handeln. Die Zeitabstände werden dabei zweckmäßigerweise derart gewählt, dass eine Ladebedarf-Bestimmung so regelmäßig erfolgt, dass ein kritischer Druckabfall rechtzeitig verhindert werden kann.

Gemäß einer vorteilhaften Weiterbildung der Erfindung ist vorgesehen, dass, wenn die erfasste Stromaufnahme einen vorgebbaren ersten Grenzwert überschreitet, der Elektromotor in einen Ladebetrieb geschaltet wird. In dem Ladebetrieb wird der Elektromotor auf eine Ladedrehzahl hochgefahren, um das Hydraulikmedium in den Betätigungskreis mit einem entsprechenden Druck und Volumenstrom einzutreiben und dadurch den Druckspeicher zu laden. Da in dem den Druckspeicher aufweisenden Betätigungskreis ein höherer Druck als in dem Kühlkreis vorliegt, muss der vorgebbare erste Grenzwert überschritten werden, um zu erfassen, dass das Hydraulikmedium in den Betätigungskreis gefördert wird, also ein Ladebedarf besteht.

Ferner ist bevorzugt vorgesehen, dass, wenn die erfasste Stromaufnahme einen vorgebbaren zweiten Grenzwert unterschreitet, der Elektromotor abgeschaltet wird. Der vorgebbare zweite Grenzwert liegt dabei zweckmäßigerweise unterhalb des vorgebbaren ersten Grenzwerts oder entspricht diesem. Wird der zweite Grenzwert unterschritten, so ist davon auszugehen, dass aufgrund des geringeren Rückstaudrucks das Hydraulikmedium in den Kühlkreis gefördert wird, und somit kein Ladebedarf besteht. Entsprechend kann der Elektromotor, sofern nicht eine Kühlanforderung besteht, abgeschaltet werden.

Besonders bevorzugt wird die Temperatur des Hydraulikmediums erfasst und der erfasste Stromwert in Abhängigkeit der Temperatur des Hydraulikmediums gewichtet. Die erfasste Stromaufnahme wird somit durch die aktuell vorliegende Temperatur des Hydraulikmediums relativiert beziehungsweise gewertet/gewichtet. Hierdurch wird gewährleistet, dass die temperaturabhängige Viskosität des Hydraulikmediums, insbesondere des Hydrauliköls, die sich selbstverständlich ebenfalls auf den Rückstaudruck auswirkt, beim Betreiben des Elektromotors und beim Erfassen der Stromaufnahme berücksichtigt wird. Zweckmäßigerweise wird die erfasste Stromaufnahme stets in Relation zur aktuellen Drehzahl des Elektromotors bestimmt. Im Betrieb kann dann beispielsweise aus einer Kennlinie und/oder einem Kennfeld schnell und einfach ermittelt werden, ob ein Speicher-Ladebedarf besteht oder nicht.

Das erfindungsgemäße Kupplungsgetriebe, das Mittel zum Erfassen des Ladebedarfs des Druckspeichers aufweist, zeichnet sich dadurch aus, dass die Mittel wenigstens eine Einrichtung zum Erfassen der Stromaufnahme des Elektromotors umfassen. Bevorzugt handelt es sich bei den Mitteln um einen oder mehrere Stromsensoren, die beispielsweise auch durch die dem Elektromotor zugeordnete Ansteuerelektronik gebildet werden können. Durch die erfasste Stromaufnahme wird, wie oben ausgeführt, auf den Ladebedarf des Druckspeichers geschlossen. Es ergeben sich hierbei die oben bereits beschriebenen Vorteile.

Erfindungsgemäß umfasst der Hydraulikkreis einen Betätigungskreis, insbesondere Hochdruckkreis, und einen Kühlkreis, insbesondere Niederdruckkreis, wobei ein hydraulisch betätigbares Schaltventil vorgesehen ist, das in Abhängigkeit vom aktuellen Druck im Betätigungskreis beziehungsweise im Druckspeicher, das Hydraulikmedium in den den Druckspeicher aufweisenden Betätigungskreis oder in den Kühlkreis leitet. Das Schaltventil ist somit zwischen der Fördereinrichtung, die zumindest den Elektromotor und die wenigstens eine Pumpe umfasst, und dem Betätigungskreis und dem Kühlkreis zwischengeschaltet, um entsprechend das geförderte Hydraulikmedium in den einen oder in den anderen Hydraulikteilkreis zu leiten.

Weiterhin ist vorgesehen, dass das Druckregelventil als druckbetätigtes 2-Wege-Schaltventil, insbesondere mit einer Schalthysterese, insbesondere als 2/2-Wege-Schaltventil, 4/2-Wege-Schaltventil oder 5/2-Wege-Schaltventil ausgebildet ist. Das derart ausgebildete Druckregelventil schaltet automatisch um, wenn der Druck in dem Betätigungskreis einen bestimmten Grenzwert überschreitet, sodass das Hydraulikmedium anschließend in den Kühlkreis geleitet wird. Erst bei Unterschreiten eines Druckwerts, der deutlich unterhalb des ersten Grenzwerts liegt, schaltet das Druckregelventil derart zurück, dass das Hydraulikmedium wieder in den Betätigungskreis gefördert wird. Dazu weist das Druckregelventil zweckmäßigerweise zwei Ventilflächen auf, wobei eine der Ventilflächen mit dem Betätigungskreis und die andere der Ventilflächen mit dem Kühlkreis verbunden ist, wobei beide Ventilflächen einem Schieber des Druckregelventils zugeordnet sind, sodass in Abhängigkeit von den Druckverhältnissen der Schieber durch die mit dem jeweiligen Druck beaufschlagten Ventilflächen in die eine oder andere Schaltstellung verbracht wird.

Im Folgenden soll die Erfindung anhand der Zeichnung näher erläutert werden. Dazu zeigt die
- Figur: den Hydraulikkreis eines erfindungsgemäßen Kupplungsgetriebes.

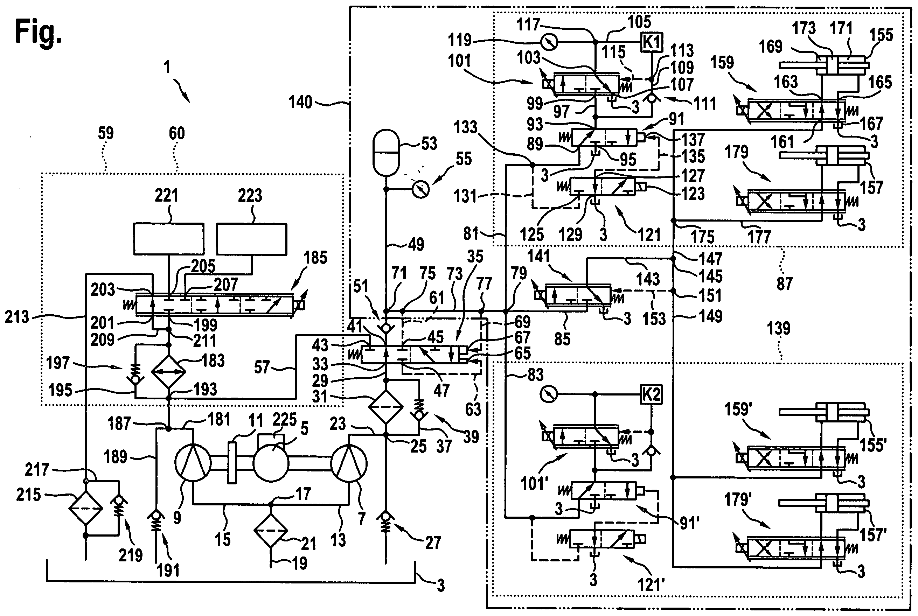

Im Folgenden wird der erfindungsgemäße Hydraulikkreis anhand von Figur 1 näher erläutert.

Figur 1 zeigt einen Hydraulikkreis 1, der der Betätigung, insbesondere dem Kuppeln sowie dem Ein- und Auslegen von Gängen, eines Doppelkupplungsgetriebes sowie dessen Kühlung dient. Der Hydraulikkreis 1 umfasst einen Tank 3, der insbesondere als Vorratsbehälter oder Sumpf für ein zur Betätigung und Kühlung verwendetes Hydraulikmedium dient, und in dem das Hydraulikmedium vorzugsweise drucklos gespeichert ist. Es ist ein Elektromotor 5 vorgesehen, der eine erste Pumpe 7 und eine zweite Pumpe 9 antreibt. Der Elektromotor 5 ist bevorzugt bezüglich seiner Drehzahl und Drehrichtung steuerbar, besonders bevorzugt regelbar. Die erste Pumpe 7 ist mit dem Elektromotor 5 fest verbunden, also ohne dass ein Trennelement vorgesehen ist. Dies bedeutet, dass die Pumpe 7 bei laufendem Elektromotor 5 stets angetrieben wird und Hydraulikmedium vorzugsweise in beiden Drehrichtungen gleichgerichtet fördert. Die Pumpe 9 ist bevorzugt über ein Trennelement 11 mit dem Elektromotor 5 verbunden. Es ist also möglich, die Pumpe 9 von dem Elektromotor 5 abzukoppeln, sodass sie nicht läuft, wenn der Elektromotor 5 läuft. Das Trennelement 11 ist vorzugsweise als Kupplung oder als Freilauf ausgebildet, wobei im zweiten Fall über die Drehrichtung des Elektromotors 5 bestimmt werden kann, ob von der Pumpe 9 Hydraulikmedium gefördert wird oder nicht.

Die erste Pumpe 7 und die zweite Pumpe 9 sind jeweils über eine Leitung 13, 15 mit einer Abzweigung 17 verbunden, in die eine weitere Leitung 19 mündet. Diese verbindet den Tank 3 über einen Saugfilter 21 mit der Abzweigung 17. Insgesamt sind damit Einlässe der Pumpen 7, 9 über die Leitungen 13, 15, die Abzweigung 17 und die den Saugfilter 21 aufweisende Leitung 19 mit dem Tank 3 verbunden.

Der Auslass der ersten Pumpe 7 ist mit einer Leitung 23 verbunden, die zu einer Abzweigung 25 führt. Die Abzweigung 25 ist über ein Druckbegrenzungsventil 27 mit dem Tank 3 verbunden. Das Druckbegrenzungsventil 27 kann bei Überdruck in Richtung des Tanks 3 öffnen. Außerdem geht von der Abzweigung 25 eine Leitung 29 aus, die über einen Druckfilter 31 zu einem Anschluss 33 eines Schaltventils 35 führt.

Der Druckfilter 31 ist durch einen Bypass 37 überbrückbar, wobei in dem Bypass 37 ein Differenzdruckventil 39 angeordnet ist, welches bei Überdruck eine Überbrückung des Filters 31 in Richtung auf den Anschluss 33 ermöglicht. Ein Öffnen des Differenzdruckventils 39 erfolgt ab einem vorgegebenen Differenzdruck über den Druckfilter 31.

Das Schaltventil 35 ist als 5/2-Wegeventil ausgebildet, welches außer dem Anschluss 33 vier weitere Anschlüsse 41, 43, 45, 47 aufweist. In einem ersten, in Figur 1 dargestellten Schaltzustand des Schaltventils 35 ist der Anschluss 33 mit dem Anschluss 41 verbunden, während die weiteren Anschlüsse 43, 45 und 47 blind, also geschlossen, geschaltet sind. Der Anschluss 41 mündet in eine Leitung 49, in der ein Rückschlagventil 51 angeordnet ist. Die Leitung 49 führt zu einem Druckspeicher 53, wobei vor dem Druckspeieher 53 eine Druckerfassungseinrichtung 55 mit der Leitung 49 hydraulisch verbunden ist.

In einem zweiten, aus der Figur 1 entnehmbaren Schaltzustand des Schaltventils 35 ist der Anschluss 33 mit dem Anschluss 43 verbunden, der in eine Leitung 57 mündet, die zu einem Hydraulikteilkreis 59 führt, der insbesondere der Kühlung von Kupplungen des Doppelkupplungsgetriebes dient. In diesem zweiten Schaltzustand ist der Anschluss 41 blind geschaltet und der Anschluss 45 ist mit dem Anschluss 47 verbunden. Dabei mündet in den Anschluss 45 eine Leitung 61, die mit dem Druck des Hydraulikmediums im Druckspeicher 53 beaufschlagt ist. Der Anschluss 47 mündet in eine Leitung 63, die mit einer ersten Ventilfläche 65 des Schaltventils 35 hydraulisch verbunden ist. Eine zweite Ventilfläche 67 des Schaltventils 35 ist über eine Leitung 69 permanent mit dem Druck des Druckspeichers 53 beaufschlagt.

Von der Leitung 49 zweigt an einer Abzweigung 71 eine Leitung 73 ab, von der wiederum in einer Abzweigung 75 die Leitung 61 und in einer Abzweigung 77 die Leitung 69 abzweigt. Die Abzweigung 71 ist auf der dem Schaltventil 35 abgewandten Seite des Rückschlagventils 51 an diesem angeschlossen.

Die Leitung 73 mündet in einer Abzweigung 79, von der Leitungen 81, 83 und 85 ausgehen.

Die Leitung 81 führt in einen Teilgetriebekreis 87 zur Versorgung eines ersten Teilgetriebes. Das erste Teilgetriebe weist eine Kupplung K1 auf. Die Leitung 81 mündet in einen Anschluss 89 eines Schaltventils 91, das als 3/2-Wegeventil ausgebildet ist, und als Sicherheitsventil für die Kupplung K1 dient. In einem ersten, dargestellten Schaltzustand des Schaltventils 91 ist der Anschluss 89 mit einem Anschluss 93 hydraulisch verbunden, während ein Anschluss 95 des Schaltventils 91 blind geschaltet ist. In einem zweiten, der Figur 1 entnehmbaren Schaltzustand des Schaltventils 91 ist der Anschluss 93 mit dem Anschluss 95 und über diesen mit dem Tank 3 verbunden, während der Anschluss 89 blind geschaltet ist. Wie im Folgenden deutlich wird, wird in diesem zweiten Schaltzustand die Kupplung K1 drucklos geschaltet.

Der Anschluss 93 ist mit einer Leitung 97 und über diese mit einem Anschluss 99 eines Druckregelventils 101 verbunden. Das Druckregelventil 101 ist als 3/2-Wege-Proportionalventil ausgebildet, das einen Anschluss 103 aufweist, der über eine Leitung 105 mit der Kupplung K1 verbunden ist. Das Druckregelventil 101 weist ferner einen Anschluss 107 auf, der mit dem Tank 3 verbunden ist. In einem ersten Extremalzustand des Druckregelventils 101 ist der Anschluss 99 mit dem Anschluss 103 verbunden, während der Anschluss 107 blind geschaltet ist. In diesem Fall wirkt der volle, in der Leitung 97 herrschende Druck des Hydraulikmediums auf die Kupplung K1. In einem zweiten Extremalzustand ist der Anschluss 103 mit dem Anschluss 107 verbunden, sodass die Kupplung K1 drucklos ist. Durch proportionale Variation zwischen diesen Extremalzuständen regelt das Druckregelventil 101 in an sich bekannter Weise den in der Kupplung K1 herrschenden Druck. Von der Kupplung K1 führt eine Leitung 109 über ein Rückschlagventil 111 zurück zur Leitung 97. Falls der Druck in der Kupplung K1 über den Druck in der Leitung 97 steigt, öffnet das Rückschlagventil 111, wodurch eine hydraulische Verbindung zwischen der Kupplung K1 über die Leitung 109 mit der Leitung 97 freigegeben wird. Von der Leitung 109 zweigt in einer Abzweigung 113 eine Leitung 115 ab, die den Druck in der Kupplung K1 als Regelgröße an das Druckregelventil 101 zurückgibt.

In der Leitung 105 ist eine Abzweigung 117 vorgesehen, durch die eine Druckerfassungseinrichtung 119 hydraulisch wirkverbunden ist. Auf diese Weise wird der in der Kupplung K1 herrschende Druck durch die Druckerfassungseinrichtung 119 erfasst.

Das Schaltventil 91 wird von einem Pilotventil 121 angesteuert. Dieses wird durch einen elektrischen Aktor 123 betätigt. Es ist als 3/2-Wegeventil ausgebildet und umfasst die Anschlüsse 125, 127 und 129. Der Anschluss 125 ist über eine Leitung 131 mit einer in der Leitung 81 vorgesehenen Abzweigung 133 verbunden. Der Anschluss 127 ist über eine Leitung 135 mit einer Ventilfläche 137 des Schaltventils 91 verbunden. In einem ersten, hier dargestellten Schaltzustand des Pilotventils 121 ist der Anschluss 125 blind geschaltet, während der Anschluss 127 mit dem Anschluss 129 und über diesen mit dem Tank 3 verbunden ist, wodurch die Ventilfläche 137 des Schaltventils 91 über die Leitung 135 drucklos geschaltet ist. Vorzugsweise nimmt das Pilotventil 121 diesen Schaltzustand ein, wenn kein elektrisches Steuersignal an dem Aktor 123 anliegt. In einem zweiten einnehmbaren Schaltzustand des Pilotventils 121 ist der Anschluss 125 mit dem Anschluss 127 verbunden, während der Anschluss 129 blind geschaltet ist. In diesem Fall wirkt der in der Leitung 81 herrschende Druck über die Abzweigung 133, die Leitung 131 und die Leitung 135 auf die Ventilfläche 137 des Schaltventils 91, wodurch dieses entgegen einer Vorspannkraft in seinen zweiten Schaltzustand geschaltet wird, in dem der Anschluss 93 mit dem Anschluss 95 hydraulisch verbunden ist, sodass die Kupplung K1 drucklos geschaltet wird. Vorzugsweise kann also durch elektrische Ansteuerung des Pilotventils 121 das Schaltventil 91 so betätigt werden, dass die Kupplung K1 drucklos geschaltet und damit geöffnet ist.

Die von der Abzweigung 79 ausgehende Leitung 83 dient der Versorgung einer Kupplung K2 eines Teilhydraulikkreises 139 eines zweiten Teilgetriebes. Die Ansteuerung der Kupplung K2 umfasst ebenfalls ein Schaltventil 91', ein Pilotventil 121' und ein Druckregelventil 101'. Die Funktionsweise ist die gleiche, die bereits in Zusammenhang mit der ersten Kupplung K1 beschrieben wurde. Aus diesem Grund wird auf die entsprechende Beschreibung zum Teilgetriebekreis 87 verwiesen. Die hydraulische Ansteuerung der Kupplung K2 entspricht derjenigen der Kupplung K1.

Die von der Abzweigung 79 ausgehende Leitung 85 ist mit einem Druckregelventil 141 verbunden, über das der Druck des Hydraulikmediums in einer Leitung 143 regelbar ist. Die Funktionsweise des Druckregelventils 141 entspricht vorzugsweise der Funktionsweise der Druckregelventile 101, 101', sodass hier eine erneute Beschreibung nicht notwendig ist. Die Leitung 143 ist mit einer Abzweigung 145 verbunden, von der eine Leitung 147 und eine Leitung 149 ausgehen. In der Leitung 149 ist eine Abzweigung 151 vorgesehen, von der eine Leitung 153 ausgeht, über die der in der Leitung 149 und damit der in der Leitung 143 herrschende Druck als Regelgröße an das Druckregelventil 141 zurückgegeben wird. Es ist offensichtlich, dass die Abzweigung 151 auch in den Leitungen 151 oder 147 vorgesehen sein kann.

Die Leitung 147 dient der Versorgung von Gangstellerzylindern 155 und 157 in dem Teilgetriebekreis 87, die als zwei doppelt wirkende Zylinder, also Gleichlaufzylinder, ausgebildet sind.

Zur hydraulischen Ansteuerung des Gangstellerzylinders 155 ist ein Volumensteuerventil 159 vorgesehen, das als 4/3-Wege-Proportionalventil ausgebildet ist. Es weist vier Anschlüsse 161, 163, 165 und 167 auf. Der erste Anschluss 161 ist mit der Leitung 147 verbunden, der zweite Anschluss 163 ist mit einer ersten Kammer 169 des Gangstellerzylinders 155 verbunden, der dritte Anschluss 165 ist mit einer zweiten Kammer 171 des Gangstellerzylinders 155 verbunden und der vierte Anschluss 167 ist mit dem Tank 3 verbunden. In einem ersten Extremalzustand des Volumensteuerventils 159 ist der erste Anschluss 161 mit dem zweiten Anschluss 163 verbunden, während der dritte Anschluss 165 mit dem vierten Anschluss 167 verbunden ist. In diesem Fall kann Hydraulikmedium von der Leitung 147 in die erste Kammer 169 des Gangstellerzylinders 155 fließen, während die zweite Kammer 171 über die Anschlüsse 165, 167 zum Tank 3 hin drucklos geschaltet ist. Auf diese Weise wird ein Kolben 173 des Gangstellerzylinders 155 in eine erste Richtung bewegt, um beispielsweise einen bestimmten Gang des Doppelkupplungsgetriebes aus- beziehungsweise einen anderen bestimmten Gang einzulegen.

In einem zweiten Extremalzustand des Volumensteuerventils 159 werden sowohl der Anschluss 163 als auch der Anschluss 165 mit dem Anschluss 167 verbunden, wobei der Anschluss 161 blind geschaltet wird. Auf diese Weise sind beide Kammern 169, 171 des Gangstellerzylinders 155 mit dem Tank 3 verbunden, sodass sie drucklos geschaltet sind. Der Kolben 173 des Gangstellzylinders 155 verharrt dann in seiner momentanen Position, weil keine Kräfte auf ihn wirken.

In einem dritten Extremalzustand des Volumensteuerventils 159 ist der Anschluss 161 mit dem Anschluss 165 verbunden und der Anschluss 163 mit dem Anschluss 167. In diesem Fall fließt Hydraulikmedium von der Leitung 147 in die zweite Kammer 171 des Gangstellenzylinders 155 und die erste Kammer 169 wird über den Anschluss 163 und den Anschluss 167 zum Tank 3 hin drucklos geschaltet. Das Hydraulikmedium übt dann eine Kraft auf den Kolben 173 des Gangstellerzylinders 155 derart aus, dass er in eine zur ersten Richtung entgegengesetzte zweite Richtung verlagert wird. Auf diese Weise kann der zuvor erwähnte bestimmte andere Gang aus- beziehungsweise der erwähnte bestimmte Gang eingelegt werden.

Wie bereits beschrieben, ist das Volumensteuerventil 159 als Proportionalventil ausgebildet. Der von der Leitung 147 kommende Hydraulikmedienstrom wird durch Variation der Ventilzustände zwischen den drei Extremalzuständen auf die Kammern 169, 171 aufgeteilt, sodass es möglich ist, durch Steuerung/Regelung des Volumenstroms eine definierte Geschwindigkeit für den Ein- beziehungsweise Auslegevorgang eines Gangs vorzugeben.

Von der Leitung 147 zweigt in einer Abzweigung 175 eine Leitung 177 ab, die in ein Volumensteuerventil 179 mündet, welches der Ansteuerung des Gangstellerzylinders 157 dient. Die Funktionsweise der hydraulischen Ansteuerung des Gangstellzylinders 157 ist die gleiche, die in Zusammenhang mit dem Gangstellerzylinder 155 beschrieben wurde. Eine erneute Beschreibung ist daher nicht notwendig.

Die Leitung 149 dient der Versorgung von Gangsstellerzylindern 155' und 157' des zweiten Teilgetriebes im Teilgetriebekreis 139. Auch zu deren Ansteuerung sind Volumensteuerventile 159' und 179' vorgesehen. Die Teilgetriebekreise 87 und 139 sind bezüglich der Ansteuerung der Gangsstellerzylinder 155, 155' beziehungsweise 157, 157' identisch ausgebildet, sodass auf die vorangegangene Beschreibung verwiesen wird.

Der Auslass der Pumpe 9 ist mit einer Leitung 181 verbunden, die zu dem Hydraulikteilkreis 59 führt, welcher vorzugsweise insbesondere der Kühlung der Kupplungen K1, K2 dient. Die Leitung 181 führt über einen Kühler 183 zu einem Volumensteuerventil 185. Hinter dem Auslass der Pumpe 9 und vor dem Kühler 183 ist eine Abzweigung 187 in der Leitung 181 vorgesehen, von der eine Leitung 189 abzweigt, die über ein in Richtung auf den Tank 3 öffnendes Druckbegrenzungsventil 191 zum Tank 3 führt. Hinter der Abzweigung 187 und vor dem Kühler 183 ist eine Abzweigung 193 vorgesehen, in die die Leitung 57 mündet, die von dem Schaltventil 35 kommt und mit dessen Anschluss 43 verbunden ist. Über die Leitung 57 ist es möglich, den Hydraulikteilkreis 59 mit von der Pumpe 7 gefördertem Hydraulikmedium zu versorgen, wenn sich das Schaltventil 35 in seinem zweiten Schaltzustand befindet. Außerdem zweigt von der Abzweigung 193 ein Bypass 195 ab, der ein Differenzdruckventil 197 aufweist und zum Kühler 183 parallel liegt. Das Differenzdruckventil 197 gibt bei Überdruck den Bypass in Richtung auf das Volumensteuerventil 185 frei. Auf diese Weise kann der Kühler 183 überbrückt werden.

Das Volumensteuerventil 185 ist als 4/3-Wege-Proportionalventil ausgebildet, das Anschlüsse 199, 201, 203, 205 und 207 aufweist. Der Anschluss 199 ist mit der Leitung 181 über den Kühler 183 beziehungsweise das Differenzdruckventil 197 verbunden, ebenso wie der Anschluss 201, der über eine Leitung 209 und eine Abzweigung 211 mit der Leitung 181 verbunden ist. Die Anschlüsse 199 und 201 bilden also, da sie beide mit der Leitung 181 stromabwärts des Kühlers 183 verbunden sind, einen gemeinsamen Anschluss des Volumensteuerventils 185. Nur aus Übersichtlichkeitsgründen sind zwei Anschlüsse 199, 201 gezeichnet, tatsächlich ist jedoch nur ein Anschluss, beispielsweise 199 oder 201, für die Leitung 181 an dem Volumensteuerventil 185 vorgesehen, wobei gemäß einem alternativen Ausführungsbeispiel das Volumensteuerventil 185 auch tatsächlich mit den zwei getrennten Anschlüssen 199, 201 als 5/3-Wege-Proportionalventil ausgebildet sein kann. Zum besseren Verständnis beziehen sich die folgenden Ausführungen auf die dargestellte Ausbildung, wobei zu berücksichtigen ist, dass es sich bei den Anschlüssen 199 und 201 eigentlich nur um einen Anschluss handelt, der entsprechend geschaltet wird. Der Anschluss 203 ist mit einer Leitung 213 verbunden, die über einen Druckfilter 215 zum Tank 3 führt. Der Druckfilter 215 ist durch einen Bypass 217 mit in Richtung auf den Tank 3 öffnendem Differenzdruckventil 219 überbrückbar.

Der Anschluss 205 des Volumensteuerventils 185 ist mit einer Kühlung 221 insbesondere für die erste Kupplung K1 verbunden. Der Anschluss 207 ist mit einer zweiten Kühlung 223 insbesondere für die zweite Kupplung K2 verbunden.

In einem ersten, in der Figur 1 dargestellten Extremalzustand des Volumensteuerventils 185 ist der Anschluss 201 mit dem Anschluss 203 verbunden, während die Anschlüsse 199, 205 und 207 blind geschaltet sind. Der gesamte in der Hydraulikleitung 181 beziehungsweise durch den Kühler 183 strömende Hydraulikmedienstrom wird also über die Anschlüsse 201, 203 in die Leitung 213 und damit über den Druckfilter 215 in den Tank 3 geleitet.

In einem zweiten Extremalzustand sind die Anschlüsse 199 und 205 miteinander verbunden, während die Anschlüsse 201, 203 und 207 blind geschaltet sind. In diesem Zustand wird der gesamte am Volumensteuerventil 185 ankommende Hydraulikmedienstrom der ersten Kühlung 221 zugeführt.

In einem dritten Extremalzustand des Volumensteuerventils 185 sind die Anschlüsse 199 und 207 miteinander verbunden. Die Anschlüsse 201, 203 und 205 sind blind geschaltet. In diesem Zustand wird demnach der gesamte in der Leitung 181 fließende Hydraulikmedienstrom der zweiten Kühlung 223 zugeführt.

Wie bereits ausgeführt, ist das Volumensteuerventil 185 als Proportionalventil ausgebildet, sodass Zwischenzustände zwischen den beschriebenen Extremalzuständen eingestellt werden können, wodurch der Volumenstrom zu den Kühlungen 221, 223 beziehungsweise zum Druckfilter 215 regelbar ist. Es ist auch möglich, das Volumensteuerventil 185 getaktet zu betreiben, wobei jeweils kurzzeitig mindestens einer der drei Extremalzustände angenommen wird. Auch bei dieser Betriebsart wird im Zeitmittel der Volumenstrom gesteuert oder geregelt, der den Kühlungen 221, 223 beziehungsweise dem Druckfilter 215 und damit dem Tank 3 zugeleitet wird.

Die Figur 1 zeigt, dass zusätzlich zum in der Leitung 181 vorhandenen Hydraulikmediumstrom ein Hydraulikmediumstrom der Leitung 57 treten und dem Hydraulikteilkreis 59 zugeführt werden kann. Alternativ ist es auch möglich, dass nur die Leitung 57 Hydraulikmedium einspeist. Zu erwähnen ist noch, dass die Proportionalventile 101, 101', 141, 159, 159', 179, 179', 185 jeweils insbesondere gegen Federkraft elektrisch proportional verstellbar sind.

Wie oben bereits ausgeführt, mündet die Leitung 57 in den Hydraulikteilkreis 59, genauer gesagt in die Leitung 181 stromabwärts der Pumpe 9. Gemäß einer alternativen, hier nicht dargestellten Ausführungsform mündet die Leitung 57 in die Leitung 181 vorzugsweise stromabwärts des Kühlers 183. Durch die Zuführung des Hydraulikmediums aus dem Hochdruckkreis in den Hydraulikteilkreis 59 gemäß der alternativen Ausführungsform wird der Gesamtvolumenstrom durch den Kühler 183 reduziert. Durch den reduzierten Volumenstrom wird der Druckabfall über den Kühler 183 reduziert, wodurch die notwendige Antriebsenergie für die Pumpen 7 und/oder 9 verringert wird. Durch eine Reduktion der Rückstaudrücke wird also die für den Elektromotor 5 benötigte Antriebsenergie reduziert. Bei einer ausreichend hohen Reduktion der Rückstaudrücke beziehungsweise des Druckniveaus - unabhängig davon, wie die Reduktion erreicht wird - ist gemäß einer weiteren Ausführungsform vorgesehen, die Pumpe 9 mit dem Elektromotor 5 direkt zu verbinden, die dargestellte Trennkupplung 11 also zu entfernen.

Gemäß einer weiteren, hier nicht dargestellten Ausführungsform bezüglich der Anordnung des Druckfilters 215 ist vorgesehen, dass dieser nicht zwischen Volumensteuerventil 185 und Tank 3 in der Leitung 213, sondern bevorzugt in der Leitung 181, insbesondere zwischen dem Kühler 183 und dem Volumensteuerventil 185, angeordnet ist. Vorzugsweise mündet dabei die Leitung 57 stromabwärts des Druckfilters 215 in die Leitung 181. Durch die alternative Anordnung des Druckfilters 215, der nunmehr im Hauptstrom des Hydraulikmediums liegt, werden die Zeitanteile erhöht, innerhalb derer das Hydraulikmedium durch den Druckfilter 215 gefiltert wird. Das Bypass-Ventil 219 wird dabei vorzugsweise auf einen minimalen Rückstaudruck über den Volumenstrom ausgelegt.

Alternativ zu der dargestellten und beschriebenen Ausführungsform des Volumensteuerventils 185 ist gemäß einer weiteren Ausführungsform vorgesehen, dass die Schaltstellungen vorzugsweise derart vertauscht sind, dass in dem ersten Extremalzustand die Anschlüsse 199 und/oder 201 mit dem Anschluss 205 oder 207 verbunden und die übrigen Anschlüsse des Volumensteuerventils 185 blind geschaltet sind, in dem zweiten Extremalzustand die Anschlüsse 201 und/oder 199 mit dem Anschluss 203 verbunden und die übrigen Anschlüsse blind geschaltet sind, und in dem dritten Extremalzustand die Anschlüsse 199 und/oder 201 mit dem Anschluss 207 oder 205 verbunden und die übrigen Anschlüsse blind geschaltet sind. Durch ein derartiges Vertauschen der Schaltstellungen wird vermieden, dass bei einem getakteten Ansteuern des Volumensteuerventils 185 zum Einstellen eines gewünschten Hydraulikmediumstroms für eine der Kupplungen K1 oder K2 ein Volumenstrom auch zur anderen Kupplung K2 beziehungsweise K1 fließt. Stattdessen wird der beim getakteten, nicht zur jeweiligen Kupplung K1 oder K2 geführte Volumenstrom in den Tank 3 geleitet. Bei der tatsächlichen Ausbildung des Volumensteuerventils 185 als 4/3-Wege-Proportionalventil sind die Anschlüsse 199 und 201 stets als gemeinsamer beziehungsweise einziger Anschluss der Leitung 181 an dem Volumensteuerventil 185 zu verstehen, so dass tatsächlich nur einer der beiden Anschlüsse 199, 201 an dem Volumensteuerventil 185 vorgesehen ist.

Dem Elektromotor 5 ist vorzugsweise eine Einrichtung 225 zum Erfassen der Stromaufnahme des Elektromotors 5 zugeordnet. Bei der Einrichtung 225 kann es sich auch um die integrierte Ansteuerschaltung des Elektromotors 5 handeln. Durch Erfassen der Stromaufnahme des Elektromotors 5 wird vorliegend bestimmt, ob der Druckspeicher 53 geladen werden muss, ob also ein Ladebedarf für den Betätigungskreis 140, der die Teilgetriebekreise 87, 139 sowie das Druckregelventil 141 und den Druckspeicher 53 umfasst, besteht.

Je nach dem, in welcher Stellung sich das Schaltventil 35 befindet, wirkt ein größerer oder ein kleinerer Rückstaudruck auf die Pumpe 7. In der dargestellten ersten Schaltstellung ist durch das Schaltventil 35 der Betätigungskreis mit der Fördereinrichtung, bestehend aus Elektromotor 5 und Pumpen 7 und 9, verbunden. Dadurch wirkt der in dem Betätigungskreis vorliegende Hochdruck auf den Ausgang der Pumpe 7. Wird das Schaltventil 35, wie oben ausgeführt, in seine zweite Schaltstellung verbracht, ist die Fördereinrichtung mit dem Teilgetriebekreis 59 beziehungsweise mit dem Kühlkreis 60 verbunden, der einen vergleichsweise kleineren Druck benötigt. Somit liegt in der zweiten Schaltstellung ein deutlich kleinerer Druck an dem Ausgang der Pumpe 7 an. Zum Bestimmen des Ladebedarfs des Druckspeichers 53 wird der Elektromotor 5 zu vorgebbaren Zeitpunkten, insbesondere in regelmäßigen Abständen, angeschaltet und auf eine bestimmte vorgebbare Drehzahl hochgefahren. Vorzugsweise erfolgt dabei das Hochfahren entlang einer vorgebbaren Drehzahlrampe. In Abhängigkeit von der Drehzahl und der erfassten Stromaufnahme wird bestimmt, ob das Schaltventil 35 das geförderte Hydraulikmedium dem Kühlkreis 60 oder dem Betätigungskreis 140 zuführt. Überschreitet der erfasste Stromaufnahmewert einen vorgebbaren Grenzwert, der den hohen Druckverhältnissen in dem Betätigungskreis 140 entspricht, so wird darauf geschlossen, dass das Schaltventil 35 entsprechen das Hydraulikmedium in den Betätigungskreis fördert, somit also ein Ladebedarf des Druckspeichers 53 vorliegt. In diesem Fall wird der Elektromotor 5 in einen Ladebetrieb geschaltet, also zum Aufladen des Druckspeichers 53 betrieben. Hierzu wird beispielsweise die Drehzahl und damit die Förderleistung erhöht. Sobald ein ausreichender Druck in dem Betätigungskreis 140 vorliegt beziehungsweise ein erster Grenzwert überschritten wurde, wird das Schaltventil 35 in den zweiten Schaltzustand verbracht, sodass das durch die Pumpe 7 geförderte Hydraulikmedium in den Kühlkreis 60 beziehungsweise in den Getriebeteilkreis 59 geleitet wird. Die Stromaufnahme wird zweckmäßigerweise während des gesamten Betriebs des Elektromotors 5 erfasst, sodass bei einem Umschalten des Schaltventils 35 auch eine Änderung in der Stromaufnahme erfasst wird. Fällt der erfasste Stromaufnahmewert unter einen vorgebbaren Grenzwert, der dem Druck in dem Getriebeteilkreis 59 zumindest im Wesentlichen entspricht beziehungsweise damit korreliert und bevorzugt aufgrund einer integrierten Schalthysterese unterhalb des ersten Grenzwerts liegt, so wird bestimmt, dass das Schaltventil 35 sich in der zweiten Schaltstellung befindet und somit kein Ladebedarf mehr vorliegt. Liegt auch kein Kühlbedarf insbesondere für die Kühlungen 221, 223 vor, so wird der Elektromotor 5 abgeschaltet. Andernfalls kann er in einen Kühlbetrieb geschaltet werden, um die Kühlungen 221, 223 mit ausreichend gekühltem Hydraulikmedium zu versorgen.

Bevorzugt wird beim Bestimmen des Ladebedarfs außerdem die Temperatur des Hydraulikmediums, insbesondere in dem Tank 3, erfasst und die erfasste Stromaufnahme in Abhängigkeit von der aktuellen Temperatur des Hydraulikmediums gewertet beziehungsweise gewichtet, um der temperaturabhängigen Viskosität des Hydraulikmediums, die sich auf den Rückstaudruck ausübt, gerecht zu werden.

Alternativ zu der oben beschriebenen Ausführungsform kann das Schaltventil 35 auch als 2/2-Wege-Schaltventil ausgebildet sein.

Durch das Bestimmen des Ladebedarfs in Abhängigkeit der Stromaufnahme des Elektromotors 5 kann der Drucksensor 55 entfallen. Vorzugsweise ist daher gemäß dem vorliegenden Ausführungsbeispiel der dargestellte Drucksensor 55 nicht vorgesehen. Dessen Funktion wird im Wesentlichen durch die Einrichtung 225 übernommen.

### BEZUGSZEICHENLISTE

- 1: Hydraulikkreis
- 3: Tank
- 5: Elektromotor
- 7: erste Pumpe
- 9: zweite Pumpe
- 11: Trennelement
- 13: Leitung
- 15: Leitung
- 17: T-Stück
- 19: Leitung
- 21: Saugfilter
- 23: Leitung
- 25: Abzweigung
- 27: Druckbegrenzungsventil
- 29: Leitung
- 31: Druckfilter
- 33: Anschluss
- 35: Schaltventil
- 37: Bypass
- 39: Differenzdruckventil
- 41: Anschluss
- 43: Anschluss
- 45: Anschluss
- 47: Anschluss
- 49: Leitung
- 51: Rückschlagventil
- 53: Druckspeicher
- 55: Druckerfassungseinrichtung
- 57: Leitung
- 59: Hydraulikteilkreis
- 60: Kühlkreis
- 61: Leitung
- 63: Leitung
- 65: Ventilfläche
- 67: Ventilfläche
- 69: Leitung
- 71: Abzweigung
- 73: Leitung
- 75: Abzweigung
- 77: Abzweigung
- 79: Abzweigung
- 81: Leitung
- 83: Leitung
- 85: Leitung
- 87: Teilgetriebekreis
- 89: Anschluss
- 91: Schaltventil
- 91': Schaltventil
- 93: Anschluss
- 95: Anschluss
- 97: Leitung
- 99: Anschluss
- 101: Druckregelventil
- 101': Druckregelventil
- 103: Anschluss
- 105: Leitung
- 107: Anschluss
- 109: Leitung
- 111: Rückschlagventil
- 113: Abzweigung
- 115: Leitung
- 117: Abzweigung
- 119: Druckerfassungseinrichtung
- 121: Pilotventil
- 121': Pilotventil
- 123: elektrische Ansteuerung
- 125: Anschluss
- 127: Anschluss
- 129: Anschluss
- 131: Leitung
- 133: Abzweigung
- 135: Leitung
- 137: Ventilfläche
- 139: Teilgetriebekreis
- 140: Betätigungskreis
- 141: Druckregelventil
- 143: Leitung
- 145: Abzweigung
- 147: Leitung
- 149: Leitung
- 151: Abzweigung
- 153: Leitung
- 155: Gangstellerzylinder
- 155': Gangstellerzylinder
- 157: Gangstellerzylinder
- 157': Gangstellerzylinder
- 159: Volumensteuerventil
- 159': Volumensteuerventil
- 161: Anschluss
- 163: Anschluss
- 165: Anschluss
- 167: Anschluss
- 169: Kammer
- 171: Kammer
- 173: Kolben
- 175: Abzweigung
- 177: Leitung
- 179: Volumensteuerventil
- 179': Volumensteuerventil
- 181: Leitung
- 183: Kühler
- 185: Volumensteuerventil
- 187: Abzweigung
- 189: Leitung
- 191: Druckbegrenzungsventil
- 193: Abzweigung
- 195: Bypass
- 197: Differenzdruckventil
- 199: Anschluss
- 201: Anschluss
- 203: Anschluss
- 205: Anschluss
- 207: Anschluss
- 209: Leitung
- 211: Abzweigung
- 213: Leitung
- 215: Druckfilter
- 217: Bypass
- 219: Differenzdruckventil
- 221: Kühlung
- 223: Kühlung
- 225: Einrichtung
- K1: Kupplung
- K2: Kupplung

## Patentansprüche

1. Verfahren zum Betreiben eines Kupplungsgetriebes, insbesondere Doppelkupplungsgetriebes, mit einem Hydraulikkreis (1), der wenigstens eine Pumpe (7,9) zum Fördern von Hydraulikmedium sowie mindestens einen Druckspeicher (53) zum Aufnehmen und Bereitstellen von unter Druck stehendem Hydraulikmedium umfasst, wobei der Pumpe (7,9) ein Elektromotor (5) zugeordnet ist, der in Abhängigkeit von einem Ladebedarf des Druckspeichers (53) betrieben wird, wobei zum Bestimmen des Ladebedarfs die Pumpe (7,9) durch den Elektromotor angetrieben und die dabei erfolgte Stromaufnahme des Elektromotors (5) ermittelt wird, **dadurch gekennzeichnet dass** der Hydraulikkreis (1) einen den Druckspeicher (53) aufweisenden Betätigungskreis (140), insbesondere Hochdruckkreis, und einen Kühlkreis (60), insbesondere Niederdruckkreis, umfasst, wobei in Abhängigkeit des Drucks des Druckspeichers (53) das Hydraulikmedium in den Betätigungskreis (140) oder in den Kühlkreis (60) geleitet wird, wobei in Abhängigkeit der Stromaufnahme ermittelt wird, ob das Hydraulikmedium in den Betätigungskreis (140) oder in den Kühlkreis (60) gefördert wird.

2. Verfahren nach Anspruch 1, **dadurch gekennzeichnet, dass** der Elektromotor (5) zu vorgebbaren Zeitpunkten angestellt und auf eine vorgebbare Drehzahl, insbesondere über eine vorgebbare Drehzahlrampe, hochgefahren wird.

3. Verfahren nach einem der vorhergehenden Ansprüche, **dadurch gekennzeichnet, dass**, wenn die erfasste Stromaufnahme einen vorgebbaren ersten Grenzwert überschreitet, der Elektromotor (5) in einen Ladebetrieb geschaltet wird.

4. Verfahren nach einem der vorhergehenden Ansprüche, **dadurch gekennzeichnet, dass**, wenn die erfasste Stromaufnahme einen vorgebbaren zweiten Grenzwert unterschreitet, der Elektromotor (5) abgeschaltet wird.

5. Verfahren nach einem der vorhergehenden Ansprüche, **dadurch gekennzeichnet, dass** die Temperatur des Hydraulikmediums erfasst und der erfasste Stromwert in Abhängigkeit der erfassten Temperatur gewichtet wird.

6. Kupplungsgetriebe, insbesondere Doppelkupplungsgetriebe, zur Durchführung des Verfahrens nach einem oder mehreren der vorhergehenden Ansprüche, mit einem Kupplungskreis (1), der wenigstens eine Pumpe (7,9) zum Fördern von Hydraulikmedium sowie mindestens einen Druckspeicher (53) zum Aufnehmen und Bereitstellen des unter Druck stehenden Hydraulikmediums umfasst, wobei Mittel zum Erfassen eines Ladebedarfs des Druckspeichers (53) vorgesehen sind, wobei die Mittel wenigstens eine Einrichtung (225) zum Erfassen der Stromaufnahme des Elektromotors umfassen, **dadurch gekennzeichnet, dass** der Hydraulikkreis (1) einen Betätigungskreis (140), insbesondere Hochdruckkreis, und einen Kühlkreis (60), insbesondere Niederdruckkreis, umfasst, wobei ein Druckregelventil (35) vorgesehen ist, das in Abhängigkeit vom aktuellen Druck im Betätigungskreis (140) das Hydraulikmedium in den den Druckspeicher (53) aufweisenden Betätigungskreis (140) oder in den Kühlkreis (60) leitet, und wobei in Abhängigkeit der Stromaufnahme ermittelt wird, ob das Hydraulikmedium in den Betätigungskreis (140) oder in den Kühlkreis (60) gefördert wird.

7. Kupplungsgetriebe nach Anspruch 6, **dadurch gekennzeichnet, dass** das Druckregelventil (35) als druckgeregeltes 2-Wege-Schaltventil, insbesondere mit einer Schalthysterese, ausgebildet ist.

## Claims

1. Method for operating a clutch transmission, in particular a twin clutch transmission, with a hydraulic circuit (1), which comprises at least one pump (7, 9) for the promotion of hydraulic medium and at least one pressure accumulator (53) for the reception and provision of hydraulic medium being under pressure, wherein an electric motor (5) is assigned to the pump (7, 9), said electric motor being operated depending on a charge requirement of the pressure accumulator (53), wherein for determining the charge requirement the pump (7, 9) is driven by the electric motor and the consequent power consumption of the electric motor (5) is determined, **characterised in that** the hydraulic circuit (1) comprises an actuating circuit (140), in particular high-pressure circuit, having the pressure accumulator (53), and a cooling circuit (60), in particular low-pressure circuit, wherein depending on the pressure of the pressure accumulator (53) the hydraulic medium is conducted into the actuating circuit (140) or into the cooling circuit (60), wherein depending on the power consumption it is determined whether the hydraulic medium is conducted into the actuating circuit (140) or into the cooling circuit (60).

2. Method according to claim 1 **characterised in that** the electric motor (5) is started at presettable points in time and is powered up to a presettable rotational speed, in particular by means of a presettable rotational speed ramp.

3. Method according to one of the preceding claims, **characterised in that** when the determined power consumption exceeds a presettable first threshold value, the electric motor (5) is switched into a charging mode.

4. Method according to one of the preceding claims, **characterised in that** when the determined power consumption undershoots a presettable second threshold value, the electric motor (5) is switched off.

5. Method according to one of the preceding claims, **characterised in that** the temperature of the hydraulic medium is determined and the determined power value is weighted depending upon the determined temperature.

6. Clutch transmission, in particular twin clutch transmission for carrying out the method according to one or more of the preceding claims, with a coupling circuit (1) which comprises at least one pump (7, 9) for the promotion of hydraulic medium and at least one pressure accumulator (53) for the reception and provision of hydraulic medium being under pressure, wherein means for determining a charge requirement for the pressure accumulator (53) are provided, wherein the means comprise at least one apparatus (225) for determining the power consumption of the electric motor, **characterised in that** the hydraulic circuit (1) comprises an actuating circuit (140), in particular high-pressure circuit, having the pressure accumulator (53), and a cooling circuit (60), in particular low-pressure circuit, wherein a pressure regulating valve (35) is provided, which, depending on the actual pressure in the actuating circuit (140), conducts the hydraulic medium into the actuating circuit (140) having the pressure accumulator (53) or into the cooling circuit (60), and wherein depending on the power consumption it is determined whether the hydraulic medium is conducted into the actuating circuit (140) or into the cooling circuit (60).

7. Clutch transmission according to claim 6, **characterised in that** the pressure regulating valve (35) is formed as a pressure-regulated two-way switch valve, in particular with a switching hysteresis.

## Revendications

1. Procédé servant à faire fonctionner une boîte de vitesses à embrayage, en particulier une boîte de vitesses à double embrayage, avec un circuit hydraulique (1), qui comprend au moins une pompe (7, 9) servant à refouler un milieu hydraulique ainsi qu'au moins un accumulateur de pression (53) servant à recevoir et à fournir un milieu hydraulique sous pression, dans lequel un moteur électrique (5) est associé à la pompe (7, 9), qui fonctionne en fonction d'un besoin de charge de l'accumulateur de pression (53), dans lequel pour définir le besoin de charge, la pompe (7, 9) est entraînée par le moteur électrique et la consommation de courant effectuée dans ce cadre du moteur électrique (5) est déterminée, **caractérisé en ce**
**que** le circuit hydraulique (1) comprend un circuit d'actionnement (140) présentant l'accumulateur de pression (53), en particulier un circuit haute pression, et un circuit de refroidissement (60), en particulier un circuit basse pression, dans lequel le milieu hydraulique est acheminé dans le circuit d'actionnement (140) ou dans le circuit de refroidissement (60) en fonction de la pression de l'accumulateur de pression (53), dans lequel est déterminé en fonction de la consommation de courant si le milieu hydraulique est refoulé dans le circuit d'actionnement (140) ou dans le circuit de refroidissement (60).

2. Procédé selon la revendication 1, **caractérisé en ce que** le moteur électrique (5) est employé à des moments pouvant être spécifiés et est monté à une vitesse de rotation pouvant être spécifiée, en particulier supérieure à une rampe de vitesse de rotation pouvant être spécifiée.

3. Procédé selon l'une quelconque des revendications précédentes, **caractérisé en ce que** le moteur électrique (5) est commuté dans un mode de charge quand la consommation de courant détectée dépasse une première valeur limite pouvant être spécifiée.

4. Procédé selon l'une quelconque des revendications précédentes, **caractérisé en ce que** le moteur électrique (5) est coupé quand la consommation de courant détectée reste inférieure à une deuxième valeur limite pouvant être spécifiée.

5. Procédé selon l'une quelconque des revendications précédentes, **caractérisé en ce que** la température du milieu hydraulique est détectée et la valeur de courant détectée est pondérée en fonction de la température détectée.

6. Boîte de vitesses à embrayage, en particulier boîte de vitesses à double embrayage, servant à mettre en oeuvre le procédé selon l'une quelconque ou plusieurs des revendications précédentes, avec un circuit d'embrayage (1), qui comprend au moins une pompe (7, 9) servant à refouler un milieu hydraulique ainsi qu'au moins un accumulateur de pression (53) servant à recevoir et à fournir le milieu hydraulique sous pression, dans laquelle des moyens servant à détecter un besoin de charge de l'accumulateur de pression (53) sont prévus, dans laquelle les moyens comprennent au moins un dispositif (225) servant à détecter la consommation de courant du moteur électrique, **caractérisé en ce que** le circuit hydraulique (1) comprend un circuit d'actionnement (140), en particulier un circuit haute pression, et un circuit de refroidissement (60), en particulier un circuit basse pression, dans laquelle une soupape de réglage de pression (35) est prévue, qui achemine, en fonction de la pression instantanée dans le circuit d'actionnement (140), le milieu hydraulique dans le circuit d'actionnement (140) présentant l'accumulateur de pression (53) ou dans le circuit de refroidissement (60), et dans laquelle est déterminé en fonction de la consommation de courant si le milieu hydraulique est refoulé dans le circuit d'actionnement (140) ou dans le circuit de refroidissement (60).

7. Boîte de vitesses à embrayage selon la revendication 6, **caractérisée en ce que** la soupape de réglage de pression (35) est réalisée sous la forme d'une soupape de commutation à 2 voies à pression réglée, en particulier avec une hystérésis de commutation.
